Europäisches Patentamt

European Patent Office

Office européen des brevets

(19)

(11) Veröffentlichungsnummer: **0 067 930**
A2

(12) # EUROPÄISCHE PATENTANMELDUNG

(21) Anmeldenummer: **82102498.1**

(22) Anmeldetag: **25.03.82**

(51) Int. Cl.³: **H 04 N 5/64**

(30) Priorität: **01.04.81 DE 8109755 U**

(43) Veröffentlichungstag der Anmeldung:
**29.12.82 Patentblatt 82/52**

(84) Benannte Vertragsstaaten:
**AT BE CH DE FR GB IT LI LU NL SE**

(71) Anmelder: **Haberkern, Ottmar**
**Reuchlinstrasse 24**
**D-6200 Wiesbaden(DE)**

(72) Erfinder: **Haberkern, Ottmar**
**Reuchlinstrasse 24**
**D-6200 Wiesbaden(DE)**

(54) **Gerät zur Bild-/Ton-Aufnahme-Wiedergabe.**

(57) Nach der vorliegenden Erfindung wird ein Videorecorder in ein gemeinsames Gehaeuse mit einem Fernsehgeraet fuer Aufnahme und Wiedergabe von Colorfernsehbildern mit Stereoton integriert.

Sonst erforderliche elektrische Verbindungen zwischen den verschiedenen Geraeten, die sonst erforderlich werden, entfallen. Durch die neue Kombinationsbauform von Color-fernsehgeraet und Videorecorder mit stereoton entsteht eine neue Bauform in integrierter Bauweise, die mehrere Bauein-heiten zu einem Kompaktgeraet zusammenfasst, wodurch sich wesentliche Kosteneinsparungen ergeben.

EP 0 067 930 A2

Croydon Printing Company Ltd.

## Geraet zur Bild- und Tonwiedergabe

Die Erfindung betrifft ein Geraet zur Bild- und Tonwiedergabe

Es ist bekannt, Fernsehgeraete mit einem Zusatzteil auszustatten, welches es ermoeglicht, das Geraet an einen Videorecorder anzuschliessen. Auf das Band des Videorecorders koennen sodann Fernsehsendungen aufgezeichnet und je nach Wunsch abgespielt werden. Darueber hinausgehend wurde zur Steigerung der Kompaktheit der Anlagen das Videorecorderteil in das Gehaeuse des Fernsehgeraetes integriert. Dies hat den Vorteil, dass die beiden Geraete nicht mehr nebeneinander aufgestellt werden muessen und dass die elektrische Verbindung zwischen diesen entfaellt. Schliesslich ist ein gewichtsmaessiger sowie ein kostenmaessiger Vorteil bei der Integrierung des Recorders in das Gehaeuse des Fernsehgeraetes zu verzeichnen.

In zunehmendem Masse werden Baender fuer Cassetten-Recorder kommerziell bespielt, so dass der Aufnahmevorgang entfaellt. Eine Ursache dieses Vorgehens ist darin zu sehen, dass die Aufnahmequalitaet des Recorders von der Empfangsqualitaet des Fernsehgeraetes abhaengig ist. Schlechte Bild- und Tonqualitaet beim Empfang bedingen somit zwangslaeufig eine qualitativ schlechte Bild- und Tonwiedergabe.

Abgesehen davon ist Gegenstand der bespielten Cassetten meist ein solches Programm, welches von Fernsehsendern nicht ausgestrahlt wird. Gedacht ist dabei beispielsweise an Spielfilme mit Ueberlaengen, Konzerte, sowie Programme mit werbendem Inhalt wie touristische Informationen. Bei Verwendung bereits bespielter Bild-Ton-Traeger ist demnach das Empfangsteil des Fernsehgeraetes sowie das Aufnahmeteil des Videorecorders ueberfluessig.

Aufgabe vorliegender Erfindung ist es, ein Geraet zur ausschliesslichen Bild- und Tonwiedergabe zu schaffen, welches kompakter und kostenguenstiger als herkömmliche Einheiten herzustellen ist, wobei ferner eine leichte Zugaengigkeit und einwandfreie Bedienbarkeit der Bedienungselemente des Geraetes angestrebt werden.

Geloest wird die Aufgabe durch ein Gehaeuse, eine in diesem Gehaeuse angeordnete Bildroehre, deren Bildschirm von einem in der Vorderwand des Gehaeuses befindlichen Loch aufgenommen wird, einen oder mehrere im Gehause an der Vorderwand bzw. einer Seitenwand des Gehaeuses hinter entsprechenden Loechern angeordneten Lautsprechern, ein im Gehaeuse befindliches Bild-Ton-Wiedergabeteil, sowie Bedienungsvorrichtungen, die durch Durchbrechungen in der Gehaeusewand gefuehrt sind oder durch Loecher zugaenglich sind.

Fuer das erfindungsgemaesse Geraet sind alle denkbaren Bild-Ton-Traeger einsetzbar. Diese werden in das Bild-Ton-Wiedergabeteil eingelegt und beim Abspielvorgang das entsprechende von diesen ausgestrahlte Signal direkt der Bildroehre bzw. dem oder den Lautsprechern zugefuehrt. Im Gegensatz zu den ueblichen Bild-Ton-Empfangs- bzw. Aufzeichnungsgeraeten entfaellt demnach bei dem erfindungsgemaessen Geraet das Empfangsteil sowie das Aufnahmeteil. Dieserhalb kann das Geraet platzsparender sowie leichter gebaut werden, da Bauteile wegfallen koennen, zudem die Herstellungskosten gesenkt werden.

Zur Bild-Ton-Wiedergabe koennen alle marktueblichen Traeger in Frage kommen. Dies sind z.B. die fuer Viedeo-Recorder Verwandten Bandcassetten sowie zur Bild-Ton-Aufzeichnung geeignete Magnetspeicherplatten.

Das erfindungsgemaesse Geraet ist vielfaeltig einsetzbar. Wird es z.B. im haeuslichen Bereich zur Freizeitgestaltung eingesetzt, ist es vorteilhaft, die Bedienungsvorrichtungen analog der ueblichen Bedienungsvorrichtungen fuer Fernsehgeraete sowie Videorecorder an der Vorderseite des Geraetes anzuordnen. Sämtliche Bedienungsfunktionen lassen sich demnach bei gleichzeitigem Kontrollieren des Bildes vornehmen.

Gemaess einer besonderen Ausfuehrungsform der Erfindung ist vorgesehen, dass die Bedienungsvorrichtungen an der Rueckseite des Geraetes angeordnet sind. Dies ist z.B. dann von Vorteil, wenn der Betrachter des Bildes sich mit der Technik bzw. der Bedienung des Geraetes nicht auszukennen braucht, sondern es nur erwuenscht ist, dem Betrachter Informationen mit Hilfe dieses Geraetes zu vermitteln. Der Betrachter sitzt demnach vor dem Bildschirm, kann sich voll auf das Bild konzentrieren, waehrend die Bedienungsperson zum einen fuer den Betrachter interessante Passagen durch Betaetigen der Bedienungsvorrichtungen
vorfuehren kann, ohne sich stoerend zwischen dem Bildschirm und dem
Betrachter zu bewegen, zum anderen der Blickkontakt zwischen dem Betrachter sowie der hinter dem Geraet sitzenden Person, die meist beratende Funktion hat, verbleibt. Denkbar ist der geschilderte Einsatz
des Geraetes beispielsweise in der Touristikbranche, in diesem Falle
sitzen sich Berater und Reiseinteressent an einem Tisch gegenueber, wobei dem Interessenten Filme ueber sein eventuell beabsichtiges Urlaubsziel vorgefuehrt werden, waehrend der hinter dem Geraet sitzende Berater
dieses bedient und ggf. direkt auf Fragen des Interessenten eingehen
kann.

Bevorzugt weist das Geraet als Bedienungsknoepfe oder Tasten ausgebildete Bedienungsvorrichtungen auf. Diese sind durch Durchbrechungen
der Gehaeusewand gefuehrt oder durch Loecher zugaenglich. Von der
Funktion her entsprechen die Bedienungsknoepfe bzw. Tasten den
ueblicherweise bei Fernsehgeraeten bzw. Videorecordern verwandten
Bedienungsvorrichtungen. Dies sind in erster Linie die Starttaste
fuer die Bild-Ton-Wiedergabe, Vor- und Ruecklauftaste, sowie Bedienungsknoepfe fuer die Bildroehre, wie Helligkeit, Kontrast, des weiteren Regelung der Lautsprecher usw. Dabei kann es vorgesehen sein,
die wiedergegebenen Programme sowohl in Mono als auch in Stereo auszustrahlen.

Weitere Merkmale der Erfindung sind in der Beschreibung der Figuren
und in den Unteranspruechen dargestellt, wobei bemerkt wird, dass
alle Einzelmerkmale und alle Kombinationen von Einzelmerkmalen erfindungswesentlich sind.

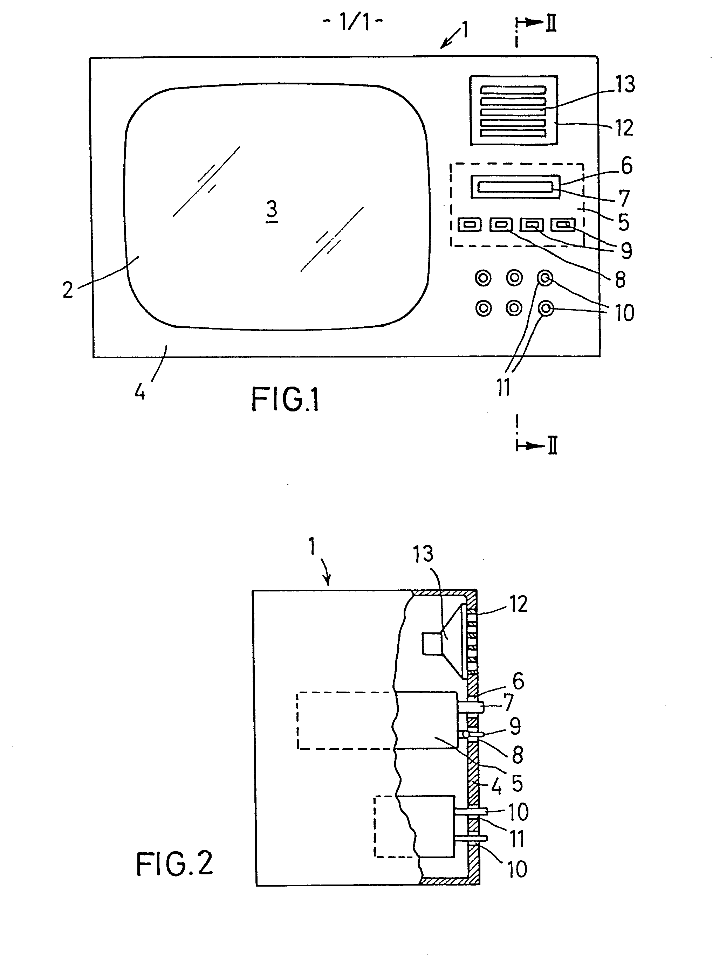

In den Figuren 1 und 2 ist die Erfindung an einer Ausfuehrungsform beispielsweise dargestellt, ohne auf diese Ausfuehrungsform
beschraenkt zu sein.

Fig. 1 zeigt eine schematische Frontansicht eines erfindungsgemaessen Geraetes mit einem Bild-Ton-Wiedergabeteil in Form eines Video-Cassetten-Recorders, wobei die Bedienungsvorrichtungen des Geraetes an der Vorderseite desselben angeordnet sind;

Fig. 2 einen Schnitt gem. der Linie II-II in Fig. 1

Im Gehäuse 1 des Geraetes ist die Bildroehre 2 untergebracht. Der Bildschirm 3 wird dabei von einem in der Vorderwand 4 des Gehaeuses 1 befindlichen Loch aufgenommen. Neben der Bildroehre 2 befindet sich das ebenfalls in das Gehaeuse eingebaute Bild-Ton-Wiedergabeteil in Form eines Videorecorders 5. In der Vorderwand 4 ist eine langgestreckte Oeffnung oder Aussparung 6 vorgesehen, durch welche eine schematisch angedeutete Cassette 7 in den Videorecorder 5 eingeschoben werden und wieder herausgezogen werden kann. Somit ist eine sehr einfache Bedienung des Videorecorders von der Vorderseite des Geraetes her moeglich. Dem gleichen Zweck dienen weitere Aussparungen oder Oeffnungen 8 in der Vorderwand 4, durch welche weitere Bedienungselemente 9, insbesondere Tasten zum Steuern des Videorecorders 5 gesteckt sind. Gedacht ist dabei in erster Linie an Bedienungselemente fuer Start, Stop, sowie Vor- und Ruecklauf des Bild-Ton-Traegers. Unterhalb des Videorecorders 5 sind schematisch Bedienungseinrichtungen zum Steuern Videorecorder unabhaengiger Groessen wie beispielsweise der Lautstaerke, der Helligkeit, des Kontrastes sowie der Farbintensitaet des Bildes in Form von Drehknoepfen 10 angeordnet. Diese Knoepfe 10 durchragen entsprechende Aussparungen 11 der Vorderwand 4, so dass sie ergreifbar sind. Man koennte aber auch die Anordnung so treffen, dass in der Vorderwand 4 entsprechend grosse Aussparungen vorgesehen sind, durch die hindurch eine Bedienungsperson die dahinter befindlichen Bedienungselement erfassen kann. Oberhalb des Videorecorders 5 ist hinter einer entsprechenden Aussparung 12 ein Lautsprecher 13 angeordnet. Dieser koennte aber auch an der Seitenwand des Gehaeuses vorgesehen sein, so dass der Schall zur Seite hinabgestrahlt wird.

Der Videorecorder 5 selber ist sehr klein konzipiert, so dass
er in einem ueblichen Fernseher-Gehaeuse Platz findet, z. B.
gemaess der dargestellten Ausfuehrungsform der Erfindung neben
der Bildroehre 2, wo er von der Waermestrahlung der Bildroehre
nicht oder nur unwesentlich beeinflusst wird. Die Erfindung kann
dabei mit Erfolg sowohl fuer tragbare Geraete als auch fuer nichttragbare Stand- oder Tischgeraete eingesetzt werden. Die Geraete
koennen sowohl Farbgeraete als auch Schwarz-Weiss-Geraete sein.

0067930

Patentansprueche:
====================

1.) Geraet zur Bild- und Tonwiedergabe und Aufnahme gekennzeichnet durch ein Gehaeuse (1), eine in diesem Gehaeuse (1) angeordnete Bildroehre (2), deren Bildschirm (3) von einem in der Vorderwand (4) des Gehaeuses (1) befindlichen Loch aufgenommen wird, einen oder mehrere im Gehaeuse (1) an der Vorderwand (4) bzw. einer Seitenwand des Gehaeuses (1) hinter entsprechenden Aussparungen (12) angeordneten Lautsprechern (13), ein im Gehaeuse (1) befindliches Bild-Ton-Wiedergabeteil (5) sowie Bedienungsvorrichtungen (7,9,10), die durch Durchbrechungen (6,8,11) in der Gehaeusewand (4) gefuehrt sind oder durch Aussparungen zugaenglich sind.

2.) Geraet nach Anspruch 1, gekennzeichnet durch als Bedienungsknoepfe (10) oder -tasten (9) ausgebildete Bedienungsvorrichtungen.

3. Geraet nach Anspruch 1 und / oder 2, dadurch gekennzeichnet, dass die Bedienungsvorrichtungen (9,10) an der Vorderseite (4) des Geraetes angeordnet sind.

4.) Geraet nach Anspruch 1 und/oder 2, dadurch gekennzeichnet, dass die Bedienungsvorrichtungen (9,10) an der Rueckseite des Geraetes angeordnet sind.

- 1/1 -

FIG.1

FIG.2

H 2- 4967